# EUROPEAN PATENT APPLICATION

(11) **EP 4 726 374 A1**
(43) Date of publication of application: **15.04.2026**
(21) Application number: 25774695.8
(22) Date of filing: 20.03.2025
(51) Int. Cl.: G01N 21/94, G01N 21/88, G01N 21/71, G01N 1/28, G06T 7/90, G01N 21/17

(54) **SYSTEM AND METHOD FOR ANALYZING COPPER-BASED FOREIGN MATERIAL**

(30) Priority: 22.03.2024 KR 20240039764
(71) Applicant: LG Energy Solution, Ltd., Seoul 07335 (KR)
(72) Inventor: SON, Young Ki, Daejeon 34122 (KR); JO, Jin Hyoung, Daejeon 34122 (KR); MOON, Hee Chul, Daejeon 34122 (KR)
(74) Representative: Goddar, Heinz J.
(86) International application number: PCT/KR2025/095026
(87) International publication number: WO 2025/198385

(57) **Abstract**

Disclosed herein relates to a copper-based dust analysis system according to the present disclosure including: a digital microscope configured to generate respective images of a specimen and a reference specimen, and to convert the images into digitized image signals; and a central processing device configured to process the digitized image signals transmitted from the digital microscope to generate image data, and to detect a copper-based dust in the image data of the specimen based on the reference data comprising image information of the copper-based dust, wherein the central processing device is configured to color-correctly process the image of the specimen and the image of the reference specimen, respectively, to distinguish the copper-based dust and the other material based on color.

## Description

### [Technical field]

This application claims the benefit of Korean Patent Application No. 10-2024-0039764, filed on March 22, 2024, the disclosure of which is incorporated herein by reference.

The present disclosure relates to a copper-based dust analysis system and method that can detect only copper-based dusts among various dusts scattered in electrode manufacturing facilities and quantitatively determine the distribution level of copper-based dusts.

### [Background]

In recent years, rechargeable secondary batteries have been widely used as energy sources for wireless mobile devices. Secondary batteries are also attracting attention as an energy source for electric vehicles and hybrid electric vehicles, which are being proposed as a way to solve air pollution from conventional gasoline and diesel vehicles that use fossil fuels. Therefore, the types of applications using secondary batteries are diversifying due to their advantages, and it is expected that secondary batteries will be applied to many more fields and products in the future.

According to the shape of the battery case, these secondary batteries are classified into cylindrical batteries and prismatic batteries, in which the electrode assembly is embedded in a cylindrical or prismatic metal can, and pouch-type batteries, in which the electrode assembly is embedded in a pouch-type case of an aluminum laminated sheet, and the electrode assembly embedded in the battery case is a power generating device capable of charging and discharging and having a positive electrode, a negative electrode, and a separator structure interposed between the positive electrode and the negative electrode.

The positive electrode and the negative electrode are manufactured by applying a positive electrode slurry including a positive electrode active material and a negative electrode slurry including a negative electrode active material to the positive electrode current collector and the negative electrode current collector, respectively, to form a positive electrode active material layer and a negative electrode active material layer, a coating process to dry the positive electrode slurry and the negative electrode slurry, a rolling process to roll the dried electrode, and a notching and cutting process to form electrode tabs and to punching them into individual electrodes.

In various manufacturing facilities for the series of processes to manufacture electrodes, various dusts, both metallic and non-metallic, may be present, and these dusts may be incorporated into the electrodes during the manufacturing process of electrodes, and the incorporation of dusts into the electrodes may cause the performance of the battery to deteriorate. In particular, metal dusts can grow into dendrites, which can cause an internal short circuit in the secondary battery, resulting in failure, damage, or even ignition of the secondary battery.

Therefore, it is necessary to quantitatively identify the distribution level of metal dusts, especially among the various types of dusts present in manufacturing facilities such as coating facilities, drying facilities, rolling facilities, notching facilities, and slitting and cutting facilities, and to manage the level of dusts in manufacturing facilities. However, the prior art for detecting or analyzing metal dusts in the field of secondary batteries is limited to detecting and analyzing dusts in the product (battery), and there is no standardized method for quickly detecting and quantifying dusts, especially metal dusts, in the manufacturing facilities of electrodes. In addition, conventional methods for detecting and analyzing dusts require capturing them with tape and then analyzing them with a scanning electron microscope (SEM) or x-ray fluorescence (XRF), which is very time-consuming, unclear in identifying the metal composition, and inaccurate in measuring the size of the dusts.

Therefore, there is a need to develop a standardized method for detecting metal dusts and an analysis method including the same for improving the quality of electrodes.

### [Prior Art]

(Patent document 0001) Korean Public Patent No. 10-2022-0111364

### [Summary]

### [Technical Problem]

The technical problem addressed by the present disclosure is to provide a standardized analytical system and analytical method for selectively detecting and quantifying only copper-based dusts, in particular, among various types of dusts present in electrode manufacturing facilities or electrode manufacturing sites.

The present disclosure aims to provide a copper-based dust analysis system and method that is optimized for detecting and analyzing copper-based dusts among various dusts, and in particular for detecting and analyzing copper-based dusts, and that minimizes the time required for detecting and analyzing copper-based dusts without complicating the procedure.

### [Technical Solution]

The technical idea of the present disclosure to solve the above problems provides a copper-based dust analysis system. A copper-based dust analysis system, according to exemplary embodiments, includes: a digital microscope configured to generate respective images of a specimen and a reference specimen, and to convert the images into digitized image signals; and a central processing device configured to process the digitized image signals transmitted from the digital microscope to generate image data, and to detect a copper-based dust in the image data of the specimen based on the reference data comprising image information of the copper-based dust, wherein the central processing device is configured to color-correctly process the image of the specimen and the image of the reference specimen, respectively, to distinguish the copper-based dust and the other material based on color.

In exemplary embodiments, the central processing device is configured to color-correctly process the image of the specimen or the image of the reference specimen in a blue hue to facilitate distinguishing the copper-based dusts.

In exemplary embodiments, the central processing device is configured to filter the copper-based dusts so that the copper-based dusts appear in a color inverse to the blue hue in the color-corrected processed image of the specimen or the color-corrected processed image of the reference specimen.

In exemplary embodiments, the central processing device is configured to remove dust particles having a size below a reference value from the image of the reference specimen.

In exemplary embodiments, the central processing device is configured to automatically calculate, in the image of the specimen, a number of detected copper-based dusts and a size of the detected copper-based dusts.

In exemplary embodiments, the digital microscope is configured to divide the specimen into a plurality of regions, and to photograph each of the divided plurality of regions.

The copper-based dust analysis system according to exemplary embodiments further includes: an output part configured to output images transmitted from the digital microscope and image data generated by the central processing device; an input part for inputting processing information for processing the image of the specimen or the image of a reference specimen; a first memory part storing image data of the reference specimen processed by the central processing device; and a second memory part storing image data of the specimen processed by the central processing device.

The copper-based dust analysis system according to exemplary embodiments further includes a component analysis part configured to analyze a component of the detected copper-based dust.

In exemplary embodiments, the component analysis part is configured for component analysis by Laser Induced Breakdown Spectroscopy (LIBS).

In exemplary embodiments, the digital microscope includes: a stage configured to hold a specimen or reference specimen; an illumination configured to shine light onto the stage; a camera configured to take each image of the specimen or reference specimen; and an optical part for obtaining high magnification images of the specimen or reference specimen.

The technical idea of the present disclosure to solve the above problems provides a copper-based dust analysis method. The copper-based dust analysis method according to exemplary embodiments includes: generating reference data comprising image information of a copper-based dust using the copper-based dust analysis system; producing a specimen by capturing dust from a test article; obtaining an image of the specimen using the copper-based dust analysis system, and processing the image of the specimen to facilitate detection of the copper-based dust in the image of the specimen; and detecting a copper-based dust in the image of the specimen, wherein detecting the copper-based dust is performed based on reference data.

In exemplary embodiments, the copper-based dust analysis system may be the above-described copper-based dust analysis system. For example, the copper-based dust analysis system includes: a digital microscope configured to generate respective images of a specimen and a reference specimen, and to convert the images into digitized image signals; and a central processing device configured to process the digitized image signals transmitted from the digital microscope to generate image data, and to detect a copper-based dust in the image data of the specimen based on the reference data comprising image information of the copper-based dust, wherein the central processing device is configured to color-correctly process the image of the specimen and the image of the reference specimen, respectively, to distinguish the copper-based dust and the other material based on color.

In exemplary embodiments, the process of producing the specimen includes: a primary capture process of capturing a dust present on the surface of a test article by primarily rolling a dust cleaning roller on the surface of the test article; and a secondary capture process of transferring the dust adhering to the dust cleaning roller to the trap paper by secondarily rolling a primarily rolled dust cleaning roller onto a trap paper, wherein an adhesive component of the trap paper has a greater adhesive force than an adhesive component of the dust cleaning roller.

In exemplary embodiments, the process of generating the reference data includes: producing a reference specimen comprising a copper-based dust; obtaining an image of a reference specimen, and processing the image of the reference specimen to facilitate detection of the copper-based dust in the image of the reference specimen; and storing the processed image of the reference specimen as reference data.

In exemplary embodiments, the process of processing the image of the reference specimen includes: color-correcting the image of the reference specimen to blue such that the image of the reference specimen facilitates identification of the copper-based dust; and filtering the image of the reference specimen such that, in the color-corrected image of the reference specimen, a color opposite to blue is displayed.

In exemplary embodiments, the process of processing the image of the reference specimen further includes removing noise from the color-corrected or filtered reference image of the specimen, wherein the process of removing the noise includes: removing dust particles below a threshold value from the color-corrected or filtered reference image of the specimen; and filling in blank areas in the color-corrected or filtered reference image of the specimen.

In exemplary embodiments, the reference specimen further includes: at least one of an electrode material and iron, in addition to the copper-based dust.

In exemplary embodiments, the process of processing an image of the specimen includes: color-correcting the image of the specimen to blue to facilitate identification of the copper-based dust in the image of the specimen; and filtering the color-corrected image of the specimen such that a color inverse to blue is visible in the color-corrected image of the specimen.

In exemplary embodiments, the process of detecting the copper-based dust includes: measuring a size of the dust detected in the image of the specimen, and counting the number of dusts.

After the process of detecting the copper-based dusts, The copper-based dust analysis method according to the exemplary embodiments of the present disclosure further includes: analyzing a component of the detected copper-based dust, wherein the process of analyzing the components of the copper-based dust uses Laser Induced Breakdown Spectroscopy (LIBS).

### [Advantageous Effects]

Exemplary embodiments of the present disclosure provide a standardized method for capturing dusts present in electrode manufacturing facilities or manufacturing sites, and for detecting and analyzing copper-based dusts.

According to exemplary embodiments of the present disclosure, the detection and analysis of copper-based dusts can be automated by converting an image of a specimen to be analyzed into a digitized signal, generating image data that has been color-corrected or color-corrected and filtered to facilitate detection of copper-based dusts, and detecting copper-based dusts in the image data, thereby significantly reducing detection and analysis time.

According to exemplary embodiments of the present disclosure, the copper-based dusts are detected by generating reference data that has been processed so that the copper-based dusts are clearly distinguished by color, and applying the reference data to the image data of the specimen to detect the copper-based dusts, thereby improving the reliability of detecting the copper-based dusts.

### [Brief Description of the Drawings]

FIG. 1 is a schematic diagram of a copper-based dust analysis system according to exemplary embodiments of the present disclosure.
FIG. 2 is a diagram illustrating an image before color correction processed by a central processing device.
FIG. 3 is a diagram illustrating an image after color correction processed by a central processing device.
FIG. 4 is a diagram illustrating an image in which the image of FIG. 3 is filtered to display colors that are inverted from the blue hue.
FIG. 5 is a diagram illustrating a screen of an output part that outputs the color adjustment process by the input part for filter processing.
FIG. 6 is a flowchart to illustrate a copper-based dust analysis method according to exemplary embodiments of the present disclosure.
FIG. 7 is a flowchart illustrating a process for generating reference data according to exemplary embodiments of the present disclosure.
FIG. 8 is a flowchart to illustrate the process of producing a specimen according to exemplary embodiments of the present disclosure.
FIG. 9 is a diagram illustrating a primary capture process according to exemplary embodiments of the present disclosure.
FIG. 10 is a diagram illustrating a secondary capture process according to exemplary embodiments of the present disclosure.

### [Description of Reference Numerals].

100: COPPER-BASED DUST ANALYSIS SYSTEM
110: DIGITAL MICROSCOPE
120: CENTRAL PROCESSING DEVICE
130: OUTPUT PART
140: INPUT PART
150: FIRST MEMORY PART
160: SECOND MEMORY PART
1: TEST ARTICLE
2: DUST CLEANING ROLLER
3: TRAP PAPER
4: TRAP CAP

### [Best Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### Copper-based dust analysis system

The following describes in detail a copper-based dust analysis system according to the present disclosure.

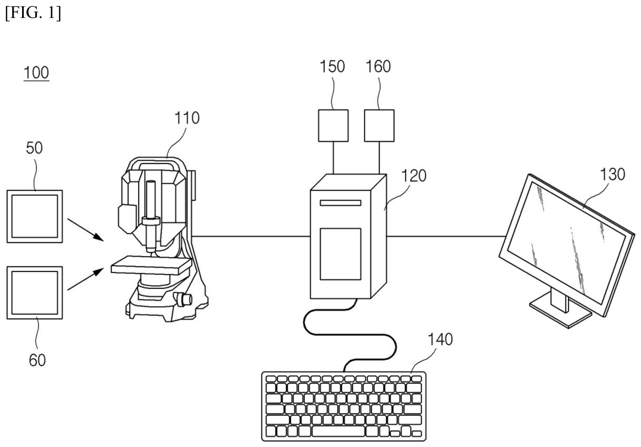

FIG. 1 is a schematic diagram of a copper-based dust analysis system according to exemplary embodiments of the present disclosure. Referring to FIG. 1, a copper-based dust analysis system 100 according to exemplary embodiments of the present disclosure may include a digital microscope 110, a central processing device 120, an output part 130, an input part 140, and memory parts 150,160.

According to the present disclosure, the central processing device 120 is configured to color-correctly process the image of the specimen and the image of the reference specimen, respectively, in order to distinguish between copper-based dusts and other materials based on color. Furthermore, the central processing device 120 is configured to detect the copper-based dust based on the image data of the reference specimen stored in the memory part in detecting the copper-based dust in the image data of the specimen, so that the analysis process is relatively easy and the dust having a small particle diameter can be detected quickly. Furthermore, the copper-based dust analysis system 100 according to the present disclosure can standardize the detection of copper-based dusts, as the image data of the reference specimen serves as a standardized reference for detecting copper-based dusts in the image of the specimen.

The digital microscope 110 may be configured to generate each image of the specimen and the reference specimen and converts them into digitized image signals. The digital microscope 110 may optionally be configured to generate a high magnification image of the specimen and a high magnification image of the reference specimen, and to convert the high magnification image into digitized image signals.

Additionally, the digital microscope 110 may be configured to photograph each of the specimen and the reference specimen, to generate each image of the specimen and each image of the reference specimen. In some embodiments, the digital microscope 110 may be configured to segment the specimen into a plurality of regions and to photograph each of the plurality of segmented regions. This allows for detailed analysis of high magnification images of the specimen. The segmented images of the specimen may be transmitted to the central processing device 120, or may be transmitted to and stored in the memory parts 150,160.

In exemplary embodiments, the digital microscope 110 may include a stage configured to hold a specimen or reference specimen; an illumination configured to shine light onto the stage; a camera configured to take each image of the specimen or reference specimen; and an optical part for obtaining high magnification images of the specimen or reference specimen.

The central processing device 120 may be configured to process the digitized image signals transmitted from the digital microscope 110 to generate image data, and to detect copper-based dusts in the image data.

The central processing device 120 may be configured to perform color correction processing or the like on the image of the specimen and the image of the reference specimen to facilitate distinguishing the copper-based dusts in the image of the specimen and the image of the reference specimen, respectively. And the central processing device 120 is configured to apply the image data of the reference specimen to the color-corrected image data of the specimen to detect a copper-based dust in the image of the specimen. Accordingly, the analysis system 100 of the present disclosure may automate a series of processes for detecting copper-based dusts in an image of a specimen.

In some embodiments, the central processing device 120 may be configured to color-correct the image of the specimen and/or the image of the reference specimen to a blue hue to facilitate the identification of copper-based dusts. In some embodiments, the color correction may be accomplished by adjusting an RGB value, in the image of the specimen or the image of the reference specimen. For example, the R value may be adjusted to 1.78, the G value may be adjusted to 1.00, and the B value may be adjusted to 7.00. By comparing the value of B to the values of R and G, and adjusting the RGB value so that it is higher, materials whose intrinsic color is in the blue range can be converted to the blue range. Copper metal has a distinctive yellow to orange color, and blue is the complementary color that contrasts with yellow to orange. Thus, in the image of the specimen or the image of the reference specimen, if the value of B is adjusted so that it is greater than the value of R and the value of G, the effect of color contrast can clearly distinguish the copper metal from other materials.

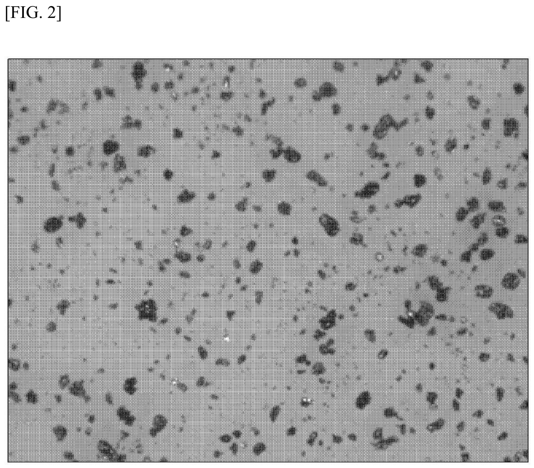

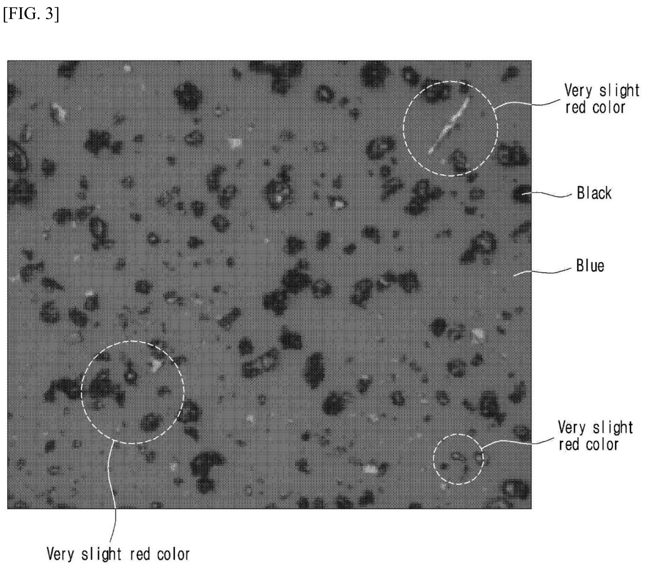

FIG. 2 is a diagram illustrating an image before color correction processed by the central processing device 120, and FIG. 3 is a diagram illustrating an image after color correction processed by the central processing device 120. Referring to these diagrams, the color correction processing converts the electrode material, other dust, and background to a blue hue, and the yellow to orange colored copper-based dust is displayed in a red hue as shown in FIG. 3. Thus, the red colored copper-based dust can be clearly distinguished from other materials.

In some embodiments, the central processing device 120 may be configured to filter the color-corrected image of the specimen and/or the color-corrected image of the reference specimen so that the copper-based dust is displayed in a color that is inverse to the blue hue.

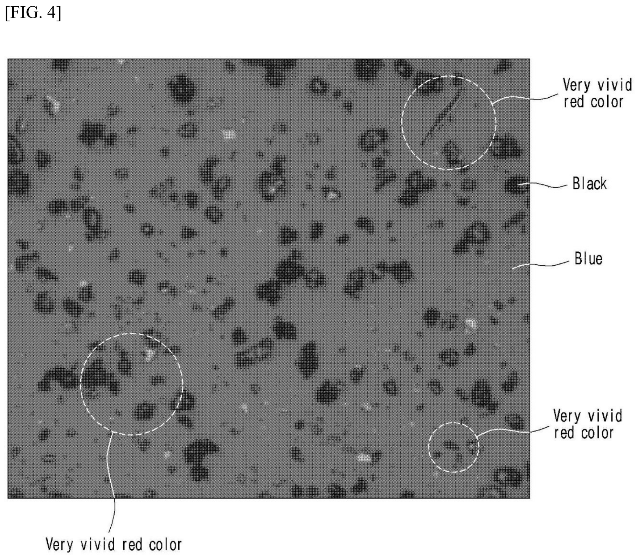

FIG. 4 is a diagram illustrating an image in which the image of FIG. 3 is filtered to show colors that are inverse to the blue hue. Referring to FIGS. 3 and 4, it can be seen that the reddish colored material within the circular dashed line is copper-based dust, and that the filter processing has the effect of making the copper-based dust more clearly distinguishable.

In some embodiments, the filter processing may be performed by selecting the portion of the image in FIG. 3 that appears reddish in color and adjusting one or more of the color, brightness, and saturation of the selected portion. Specifically, the operator may select, via input part 140, a portion of the image in FIG. 3 that appears in the red hue, and may adjust the color value such that the selected portion appears in a color that is inverse to the blue hue. The operator may also adjust the brightness value and/or saturation value as appropriate to more clearly distinguish copper-based dust as needed.

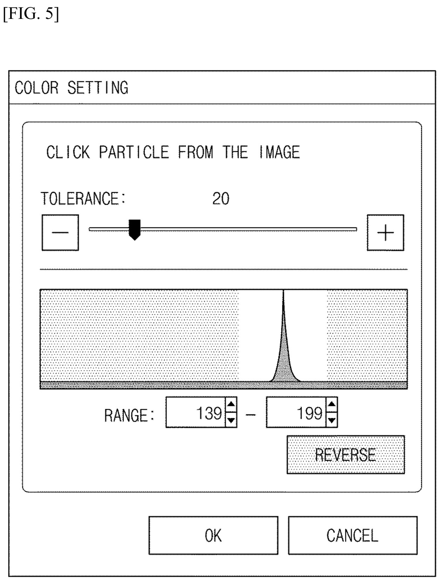

FIG. 5 is a diagram illustrating a screen of an output part where the color adjustment process by the input part is output for filter processing. The operator can select the portion of the image in FIG. 3 that appears in the red hue via the input part 140, set a range 139 to 199 of ±30 from the peak center axis representing the blue wavelength as shown in FIG. 5, and input the inversion processing. The central processing device 120 may then perform an inversion processing on the selected portion of the image in FIG. 3, such that the selected portion of the image in FIG. 3 appears in a more vivid red color. This can facilitate the detection of copper-based dusts, which can dramatically reduce the time required to detect copper-based dusts.

In some embodiments, the central processing device 120 may be configured to remove dust particles having a size below a reference value from the image of the reference specimen. Here, the dust particles may be copper-based dusts particles only, or may be dust particles including copper-based dusts. The image of the reference specimen serves as reference data for detecting copper-based dusts in the image of the specimen to be analyzed. If dusts with sizes below the reference value are removed from the image of the reference specimen, only dusts with sizes above the reference value can be detected in the image of the specimen, which can dramatically reduce the detection time of copper-based dusts. For example, if dust particles with a size of less than 5 µm × 5 µm are removed from the image of a reference specimen, only dust particles with a size of 5 µm × 5 µm or larger can be detected in the image of the specimen, which can significantly reduce the detection time of copper-based dusts .

The image of a specimen shows metal dusts of various types and diameters, and it is not necessary to know the distribution level of all sizes of metal dusts. Rather, it may be of interest to know the distribution level of metal dusts above a certain size, or of metal dusts with a certain range of sizes. According to the present disclosure, it is possible to selectively detect copper-based dusts in the image of a specimen based on color information, but only metal dusts of a certain size or a predetermined range of sizes, and to perform a composition analysis on the detected copper-based dusts. Thus, the distribution level of copper-based dusts of significant size and the composition of copper-based dusts can be determined very quickly, and a standardized method for analyzing the distribution level and detailed composition of copper-based dusts present in an electrode manufacturing facility or manufacturing site can be provided.

The central processing device 120 may be configured to detect copper-based dusts by retrieving and applying reference data including image information of copper-based dusts stored in the memory parts 150,160 to the image of the specimen that has been color-corrected as described above to detect copper-based dusts. The reference data may include a color-corrected image of a reference specimen, a color-corrected and filtered image of a reference specimen, and the like.

The central processing device 120 is configured to apply the reference data to the color-corrected image of the specimen or the color-corrected and filtered image of the specimen. Accordingly, a portion of the color-corrected image of the specimen or the color-corrected and filtered image of the specimen that is recognized as being identical to the reference data can be detected as a copper-based dust.

In some embodiments, the central processing device 120 may be configured to automatically calculate, from the image of the specimen, the number of detected copper-based dusts and the size of the detected copper-based dusts. According to the present disclosure, copper-based dusts exhibit a reddish color in the image of the specimen, so the central processing device 120 can quickly detect copper-based dusts based on the color, count the number of detected copper-based dusts, and automatically calculate the size of the copper-based dusts based on the number of pixels in the region of the detected copper-based dusts.

In some embodiments, the central processing device 120 may detect copper-based dust by batch applying image data from the reference specimen to each of the segmented images taken by dividing the specimen into a plurality of regions, and may automatically calculate the number of copper-based dust detected and the size of the copper-based dust.

The output part 130 may be configured to output the image transmitted from the digital microscope 110 and the image data generated by the central processing device 120. The output part is not limited to any type as long as it is capable of outputting digitized image signals.

The image transmitted from the digital microscope 110 may be an image prior to color correction processing by the central processing device 120. The image transmitted from the digital microscope 110 may be a high magnification image of the reference specimen shown in FIG. 2 and a high magnification image of the specimen.

The image data generated by the central processing device 120 may include, in some embodiments, a color-corrected image of the high magnification image of the specimen, a color-corrected image of the high magnification image of the reference specimen, a color-corrected and filtered image of the high magnification image of the specimen, and a color-corrected and filtered image of the high magnification image of the reference specimen.

In addition, the output part 130 may also be configured to output various information input via the input part 140. For example, as shown in FIG. 5, the output part 130 may output various processing information input by the input part.

The input part 140 may be configured to input processing information for processing an image of a specimen or an image of a reference specimen. For example, based on processing information such as R values, G values, and B values input by the input part 140, the central processing device 120 may color-correct the image of the specimen or color-correct the image of the reference specimen to generate the image data shown in FIG. 3 from the image data shown in FIG. 2. Furthermore, based on the color filter information input by the input part 140, the central processing device 120 may filter the color-corrected image of the specimen so that the copper-based dust is displayed in a color that is inverse to the blue hue, or may filter the color-corrected image of the reference specimen so that the copper-based dust is displayed in a color that is inverse to the blue hue, to generate the image data of FIG. 4 from the image data of FIG. 3.

In this way, the image of the specimen generated by the digital microscope and the image of the reference specimen may be stored in the memory parts 150,160, respectively. In addition, the image of the specimen that has been color-corrected by the central processing device and the image of the reference specimen that has been color-corrected by the central processing device may also be stored in the memory parts 150,160. The image of the specimen that has been color-corrected and filtered by the central processing device and the image of the reference specimen that has been color-corrected and filtered by the central processing device may also be stored in the memory parts 150, 160.

In some embodiments, the memory part may be divided into a first memory part 150 and a second memory part 160.

The first memory part 150 may be configured to store image data of a reference specimen processed by the central processing device 120. The image data of the reference specimen processed by the central processing device 120 may include color-corrected image data and filtered image data. In addition to the image data of the reference specimen, the first memory part 150 may also store images of the reference specimen transmitted from the digital microscope.

The second memory part 160 may be configured to store image data of the specimen processed by the central processing device 120. The image data of the reference specimen processed by the central processing device 120 may include color-corrected image data and filtered image data. In addition to the image data of the reference specimen, the second memory part 160 may also store images of the specimen transmitted from the digital microscope.

In some embodiments, the analysis system 100 may further include a component analysis part (not shown) configured to analyze a component of the detected copper-based dust. The component analysis part may be for verifying whether the copper-based dust detected in the image of the specimen is indeed a copper-based dust.

In some embodiments, the component analysis part (not shown) may be configured for component analysis by Laser Induced Breakdown Spectroscopy (LIBS). Laser Induced Plasma Spectroscopy (LIBS) is a spectroscopic analysis method that focuses a laser beam on a specimen and uses plasma generated by light energy similar to an electrical discharge as an excited source, and has the advantages of qualitative and quantitative analysis of almost all elements regardless of the state of the specimen, no pretreatment of the specimen is required, and real-time analysis is possible due to the short analysis time.

### Copper-based dust analysis method

The following describes in detail a copper-based dust analysis method according to the present disclosure.

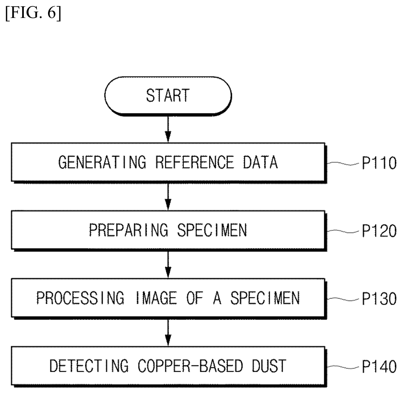

FIG. 6 is a flowchart to illustrate a copper-based dust analysis method according to exemplary embodiments of the present disclosure. Referring to FIG. 6, a copper-based dust analysis method according to the present disclosure may include generating reference data (P110), preparing a specimen (P120), processing an image of the specimen (P130), and detecting a copper-based dust (P140).

According to the present disclosure, the detection of copper-based dusts in the image of the specimen to be analyzed is based on reference data including image information of the copper-based dusts, so that the detection of copper-based dusts in the image of the specimen can be performed quickly and accurately. Furthermore, the reference data provides a standardized criterion for detecting copper-based dusts in the image of the specimen, so that the copper-based dust analysis method according to the present disclosure can standardize the detection of copper-based dusts.

The copper-based dust analysis method according to the present disclosure may be performed using a copper-based dust analysis system as described above. For example, the copper-based dust analysis system may include: a digital microscope configured to generate respective images of a specimen and a reference specimen, and to convert the images into digitized image signals; and a central processing device configured to process the digitized image signals transmitted from the digital microscope to generate image data, and to detect a copper-based dust in the image data of the specimen based on reference data including image information of the copper-based dust, wherein the central processing device may be configured to perform color correction processing on the image of the specimen and the image of the reference specimen, respectively, to enable the copper-based dust and the other material to be distinguished based on color.

The process of generating reference data (P110) may be a process of generating reference data including image information of a copper-based dust. The reference data may serve as a reference for detecting the copper-based dust in the image of the specimen to be analyzed. The reference data may be color-corrected images of the reference specimen, or image data that has been color-corrected and filtered from images of the reference specimen. In such image data, electrode material, other dusts, and background that are non-copper-based dust appear in a blue color that is inverted from the intrinsic color of the copper metal, and copper-based dust appears in a yellow to orange color, so that copper-based dust can be clearly distinguished from other materials by color, thereby enabling rapid and accurate detection of copper-based dust in the image data of the specimen.

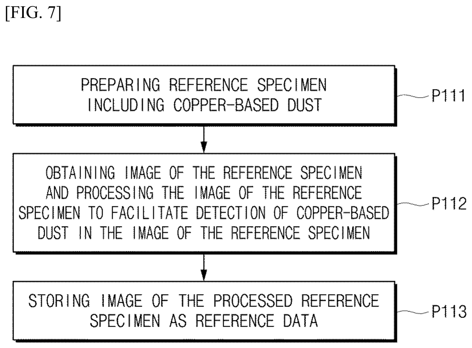

FIG. 7 is a flowchart illustrating a process for generating reference data according to exemplary embodiments of the present disclosure. Referring to FIG. 7, the process of generating reference data (P110) according to exemplary embodiments of the present disclosure may include: preparing a reference specimen including a copper-based dust (P111); obtaining an image of the reference specimen, processing the image of the reference specimen to facilitate detection of the copper-based dust in the image of the reference specimen (P112); and storing the processed image of the reference specimen as reference data (P113).

The process of preparing the reference specimen (P111) is a process of preparing a reference specimen including a copper-based dust to obtain the reference data. The reference specimen may further include, in addition to the copper-based dust, at least one of the electrode material and iron. Since the electrode manufacturing facility or the electrode manufacturing site contains, in addition to the copper-based dusts, the electrode material and metals such as iron, and the specimen is made by collecting the above dusts scattered in the electrode manufacturing facility or the electrode manufacturing site, the reference specimen is preferably made to contain, in addition to the copper-based dusts, one or more of the electrode material and iron. The reference specimen may be prepared to have a shape and size suitable for mounting on the stage of the digital microscope 110.

The process of processing the image of the reference specimen (P112) is a process of obtaining an image of the reference specimen and processing the image of the reference specimen to facilitate detection of copper-based dusts in the collected image of the reference specimen. The image of the reference specimen may be generated by the digital microscope 110. Since copper-based dusts have micrometer-scale sizes, the image of the reference specimen is preferably a high magnification image.

In some embodiments, a high magnification image of the reference specimen can be obtained by mounting the reference specimen on the stage of the digital microscope 110, using an illumination to shine light onto the reference specimen mounted on the stage, and appropriately adjusting the optical part, e.g., illumination aperture, polarizing filter, to obtain a high magnification image of the reference specimen.

The digital microscope 110 may generate a high magnification image of the reference specimen, convert it to a digitized image signal, and transmit it to the central processing device 120. The central processing device 120 can convert the high magnification image of the reference specimen to facilitate detection of copper-based dusts.

In some embodiments, the process P112 of processing the image of the reference specimen may include: color-correcting the image of the reference specimen to blue to facilitate identification of copper-based dusts in the image of the reference specimen (P112-1); and filtering the color-corrected image of the reference specimen to display a color inverse to blue in the color-corrected image of the reference specimen (P112-2).

The color-correction processing (P112-1) may include adjusting an RGB value of the image of the reference specimen. For example, the RGB values may be adjusted such that the value of B is higher compared to the values of R and G, such as an R value of 1.78, a G value of 1.00, and a B value of 7.00. Copper metal has an intrinsic color of yellow to orange, and blue is a complementary color that contrasts with yellow to orange. Therefore, in the image of the reference specimen, adjusting the color value to make the B value larger than the R value and G value can clearly distinguish copper metal from other materials by the effect of color contrast. Through the color-correction processing (P112-1), the image before color correction processing (see FIG. 2) can be converted into a color-corrected image as shown in FIG. 3. Referring to these diagrams, the color-correction processing converts the electrode material, other dust, and the background to a blue color, so that the copper-based dust having a yellow to orange color is displayed in a red color as shown in FIG. 3. Thus, the copper-based dust having a red color can be clearly distinguished from other materials.

The filtering process (P112-2) is a process of color filtering the color-corrected image of the reference specimen so that the copper-based dusts is displayed in a color that is inverse to the blue hue.

FIG. 4 is a diagram illustrating an image in which the image of FIG. 3 is filtered to show colors that are inverse to the blue hue. Referring to FIGS. 3 and 4, it can be seen that the reddish colored material within the circular dashed lines is copper-based dust, and that the filtering has the effect of making the copper-based dust more clearly distinguishable.

In some embodiments, the filter processing may be performed by selecting the portion of the image in FIG. 3 that appears reddish in color and adjusting one or more of the color, brightness, and saturation of the selected portion. Specifically, the operator may select, via input part 140, a portion of the image of FIG. 3 that appears in the red hue, and may adjust the color value such that the selected portion appears in a color that is inverse to the blue hue. The operator may also adjust the brightness value and/or saturation value as appropriate to more clearly distinguish the copper-based dust.

FIG. 5 is a diagram illustrating a screen of an output part where the color adjustment process by the input part is output for filter processing. The operator can select the portion of the image in FIG. 3 that appears in the red hue via the input part 140, set a range 139 to 199 of ±30 from the peak center axis representing the blue wavelength as shown in FIG. 5, and input the inversion processing. The central processing device 120 may then perform an inversion processing on the selected portion of the image in FIG. 3, such that the selected portion of the image in FIG. 3 appears in a more vivid red color. This may facilitate the detection of copper-based dusts, which may dramatically reduce the time required to detect copper-based dusts.

In some embodiments, the process of processing the image of the reference specimen (P112) may further include removing noise from the color-corrected or filtered image of the reference specimen (P112-3). The process of removing noise (P112-3) may include: removing dust particles below a reference value from the color-corrected or filtered image of the reference specimen (P112-3-1); and filling in blank areas in the color-corrected or filtered image of the reference specimen (P112-3-2).

In the process of removing dust particles (P112-3-1), the dust particles may be only copper-based dust particles, or may be dust particles including copper-based dusts. Since the image of the reference specimen serves as reference data for detecting copper-based dusts in the image of the specimen to be analyzed, when dusts having a size below the reference value are removed from the image of the reference specimen, only dusts having a size above the reference value can be detected in the image of the specimen, thereby improving the efficiency of the analysis. Specifically, if dust particles having a size of less than 5 µm × 5 µm are removed from the image of the reference specimen, the detection time of dust particles having a size of more than 5 µm × 5 µm in the image of the specimen can be reduced.

The process of filling in the blank area (P112-3-2) may be a process of filling in the blank area so that the blank area is the same as the background color, since the removed area becomes blank when a dust having a size less than the reference value is removed from the color-corrected or filtered image of the reference specimen.

The image of the reference specimen that has undergone this process may be stored in the memory part as reference data. The image of the reference specimen, the image of the reference specimen with color correction, and the image of the reference specimen with color correction and filter processing are stored in the memory part as reference data, and the reference data stored in the memory part is used when detecting copper-based dusts in the image of the specimen.

The process of preparing a specimen (P120) may be a process of preparing a specimen to capture dusts from the test article and to facilitate detection of copper-based dusts. The test article may refer to an electrode manufacturing facility or an electrode manufacturing site. An electrode manufacturing facility is any facility for manufacturing electrodes, including, but not limited to, a facility for manufacturing an electrode slurry, a facility for coating an electrode slurry, a facility for transferring a current collector sheet, a facility for drying an electrode, a facility for rolling an electrode, a facility for notching an electrode, and a facility for cutting an electrode.

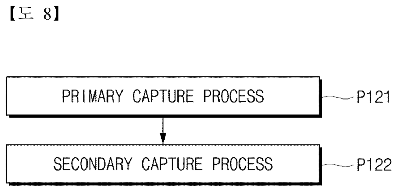

FIG. 8 is a flowchart to illustrate a process for preparing a specimen according to exemplary embodiments of the present disclosure. Referring to FIG. 8, the process of preparing a specimen P120 may include: a primary capture process P121; and a secondary capture process P122.

The primary capture process P121 may be a process of primarily rolling the Dust Cleaning Roller over the surface of the specimen to capture dust present on the surface of the specimen with the Dust Cleaning Roller.

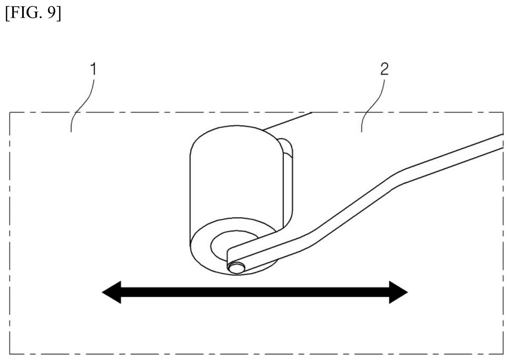

FIG. 9 is a diagram illustrating a primary capture process according to exemplary embodiments of the present disclosure. Referring to FIG. 9, in order to capture dust present on the test article, an operator rolls a dust cleaning roller 2 positioned on the surface of the test article 1. The dust cleaning roller 2 may be configured to adhere the dust present on the surface of the test article to the surface of the dust cleaning roller 2 by rolling. For example, the surface of the dust cleaning roller 2 may be coated with an adhesive material, so that the dust present on the rolling portion of the test article may adhere to the surface of the dust cleaning roller 2.

The secondary capture process P122 may be a process of transferring the dusts attached to the dust cleaning roller to the trap paper by secondarily rolling the primarily rolled dust cleaning roller onto the trap paper.

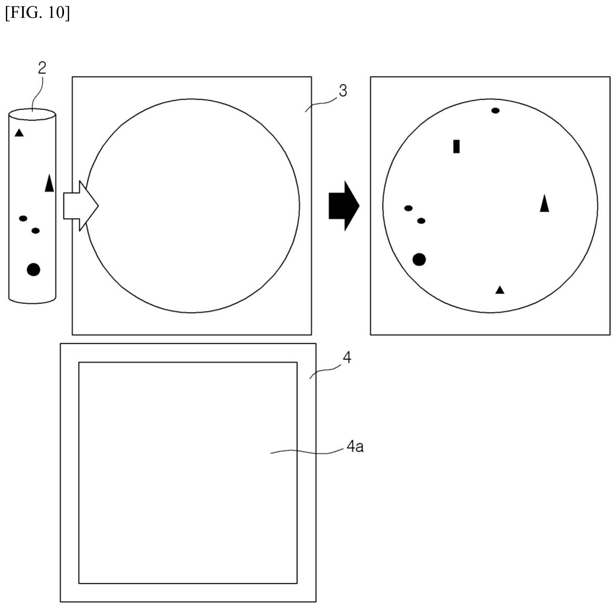

FIG. 10 is a diagram illustrating a secondary capture process according to exemplary embodiments of the present disclosure. Referring to FIG. 10, when the primarily rolled dust cleaning roller 2 is rolled onto the trap paper 3, the dust that was attached to the dust cleaning roller 2 is transferred to the trap paper 3 by the adhesive component of the trap paper 3. At this time, the dusts are transferred to the trap paper 3 in a mono-layer.

In order for the dust attached to the surface of the dust cleaning roller 2 to be transferred to the trap paper 3, the surface of the trap paper 3 is coated with an adhesive component. The adhesive component is more adhesive than the adhesive component of the dust cleaning roller. Thus, when the dust cleaning roller 2 is rolled on the surface of the trap paper 3, the dust attached to the dust cleaning roller 2 can be transferred to the trap paper 3. The trap paper 3 onto which the dust is transferred is kept closed with a trap cap 4 to prevent contamination of the trap paper. The trap cap 4 may comprise a transparent window 4a comprising a transparent film.

The process of processing the image of the specimen (P130) may be a process of obtaining an image of the specimen and processing the image of the specimen to facilitate detection of copper-based dusts in the collected image of the specimen. Further, the process of processing the image of the specimen (P130) may be the same or similar to the process of processing the image of the reference specimen (P112) described above.

In some embodiments, the process of processing the image of the specimen (P130) may be performed using the copper-based dust analysis system described above. Specifically, the image of the specimen may be generated by the digital microscope 110. Since copper-based dusts have micrometer-scale dimensions, the image of the specimen is preferably a high magnification image.

In some embodiments, a high magnification image of the specimen can be obtained by mounting the specimen on a stage of the digital microscope 110, using an illumination to shine light onto the specimen mounted on the stage, and making appropriate adjustments to the optical part, e.g., illumination aperture, polarizing filter, etc.

The digital microscope 110 may generate a high magnification image of the specimen, convert it to a digitized image signal, and transmit it to the central processing device 120. The central processing device 120 may convert the high magnification image of the specimen to facilitate detection of copper-based dusts.

The process of processing the image of the specimen (P130) may include color-correcting the image of the specimen (P131) to blue to facilitate identification of copper-based dusts in the image of the specimen; and filtering the image of the specimen (P132) to display a color opposite to blue in the color-corrected image of the specimen.

Since the process of color-correcting the image of the specimen (P131) and the process of filtering the image of the specimen (P132) are identical in content to the process of color-correcting the image of the reference specimen (P112-1) and the process of filtering the image of the reference specimen (P112-2), respectively, described above, duplicate descriptions will be omitted.

The image of the specimen that has undergone these processes can be stored in the memory part as data. That is, the image of the specimen, the color-corrected image of the specimen, and the image of the specimen that has been color-corrected and filtered are stored in the memory part as data.

The process (P140) of detecting a copper-based dust in the image of the specimen is performed based on the reference data. The image of the specimen may be a color-corrected image of a specimen or a color-corrected and filtered image of a specimen. The reference data may include a color-corrected image of a reference specimen or a color-corrected and filtered image of a reference specimen. The color-corrected image of the specimen, the color-corrected and filtered image of the specimen, the color-corrected image of the reference specimen, and the color-corrected and filtered image of the reference specimen are all converted to clearly distinguish copper-based dusts by correcting at least one of color, saturation, and brightness.

According to the present disclosure, copper-based dusts are detected by applying reference data to the image of the specimen, wherein the reference data is processed and converted so that the copper-based dusts are clearly distinguished by color, thereby improving the reliability of detecting the copper-based dusts.

In some embodiments, the process (P140) of detecting copper-based dusts in the image of the specimen may include calculating the number and size of the detected copper-based dusts. As described above, when using a copper-based dust analysis system according to the present disclosure, the number and size of copper-based dusts can be calculated automatically because the copper-based dusts are detected by processing image data that has been converted into digital signals.

In some embodiments, the copper-based dust analysis method may further include analyzing a component of the detected copper-based dusts (P150). The process of analyzing the components of the detected copper-based dust (P150) may be performed after the process of detecting the copper-based dust (P140). The process of analyzing the components of the copper-based dust (P150) is a process of analyzing the components of the copper-based dust detected by the process of detecting the copper-based dust (P140) to further analyze the components of copper metal. In some embodiments, the process (P150) of analyzing the composition of the copper-based dust may utilize Laser Induced Breakdown Spectroscopy (LIBS) for the component analysis. Accordingly, components other than copper can be identified in the detected copper-based dusts.

The present disclosure has been described in more detail above with reference to the drawings and embodiments. However, it should be understood that the configurations described in the drawings or embodiments are only one embodiment of the disclosure and do not represent all of the technical ideas of the disclosure, and that there may be various equivalents and modifications that may be substituted for them at the time of filing the present application.

## Claims

1. A copper-based dust analysis system a comprising:
a digital microscope configured to generate respective images of a specimen and a reference specimen, and to convert the images into digitized image signals; and
a central processing device configured to process the digitized image signals transmitted from the digital microscope to generate image data, and to detect a copper-based dust in the image data of the specimen based on the reference data comprising image information of the copper-based dust, wherein
the central processing device is configured to color-correctly process the image of the specimen and the image of the reference specimen, respectively, to distinguish the copper-based dust and the other material based on color.

2. The copper-based dust analysis system of claim 1, wherein
the central processing device is configured to color-correctly process the image of the specimen or the image of the reference specimen in a blue hue to facilitate distinguishing the copper-based dusts.

3. The copper-based dust analysis system of claim 1, wherein
the central processing device is configured to filter the copper-based dusts so that the copper-based dusts appear in a color inverse to the blue hue in the color-corrected processed image of the specimen or the color-corrected processed image of the reference specimen.

4. The copper-based dust analysis system of claim 1, wherein
the central processing device is configured to remove dust particles having a size below a reference value from the image of the reference specimen.

5. The copper-based dust analysis system of claim 1, wherein
the central processing device is configured to automatically calculate, in the image of the specimen, a number of detected copper-based dusts and a size of the detected copper-based dusts.

6. The copper-based dust analysis system of claim 1, wherein
the digital microscope is configured to divide the specimen into a plurality of regions, and to photograph each of the divided plurality of regions.

7. The copper-based dust analysis system of claim 1, further comprising:
an output part configured to output images transmitted from the digital microscope and image data generated by the central processing device;
an input part for inputting processing information for processing the image of the specimen or the image of the reference specimen;
a first memory part storing image data of the reference specimen processed by the central processing device; and
a second memory part storing image data of the specimen processed by the central processing device.

8. The copper-based dust analysis system of claim 1, further comprising:
a component analysis part configured to analyze a component of the detected copper-based dust.

9. The copper-based dust analysis system of claim 8, wherein
the component analysis part is configured for component analysis by Laser Induced Breakdown Spectroscopy (LIBS).

10. The copper-based dust analysis system of claim 1, wherein
the digital microscope comprises:
a stage configured to hold a specimen or reference specimen;
an illumination configured to shine light onto the stage;
a camera configured to take each image of the specimen or reference specimen; and
an optical part for obtaining high magnification images of the specimen or reference specimen.

11. A copper-based dust analysis method comprising:
generating reference data comprising image information of a copper-based dust using a copper-based dust analysis system;
producing a specimen by capturing dust from a test article;
obtaining an image of the specimen using the copper-based dust analysis system, and processing the image of the specimen to facilitate detection of the copper-based dust in the image of the specimen; and
detecting a copper-based dust in the image of the specimen, wherein
detecting the copper-based dust is performed based on the reference data.

12. The copper-based dust analysis method claim 11, wherein
the copper-based dust analysis system comprises:
a digital microscope configured to generate respective images of a specimen and a reference specimen, and to convert the images into digitized image signals; and
a central processing device configured to process the digitized image signals transmitted from the digital microscope to generate image data, and to detect a copper-based dust in the image data of the specimen based on the reference data comprising image information of the copper-based dust, wherein
the central processing device is configured to color-correctly process the image of the specimen and the image of the reference specimen, respectively, to distinguish the copper-based dust and the other material based on color.

13. The copper-based dust analysis method of claim 11, wherein
the process of producing the specimen comprises:
a primary capture process of capturing a dust present on the surface of a test article by primarily rolling a dust cleaning roller on the surface of the test article; and
a secondary capture process of transferring the dust adhering to the dust cleaning roller to the trap paper by secondarily rolling a primarily rolled dust cleaning roller onto a trap paper, wherein
an adhesive component of the trap paper has a greater adhesive force than an adhesive component of the dust cleaning roller.

14. The copper-based dust analysis method of claim 11, wherein
the process of generating the reference data comprises:
producing a reference specimen comprising a copper-based dust;
obtaining an image of a reference specimen, and processing the image of the reference specimen to facilitate detection of the copper-based dust in the image of the reference specimen; and
storing the processed image of the reference specimen as the reference data.

15. The copper-based dust analysis method of claim 14, wherein
the process of processing the image of the reference specimen comprises:
color-correcting the image of the reference specimen to blue such that the image of the reference specimen facilitates identification of the copper-based dust; and
filtering the image of the reference specimen such that, in the color-corrected image of the reference specimen, a color opposite to blue is displayed.

16. The copper-based dust analysis method of claim 15, wherein
the process of processing the image of the reference specimen further comprises removing noise from the color-corrected or filtered image of the reference specimen, wherein
the process of removing the noise comprises:
removing dust particles below a threshold value from the color-corrected or filtered image of the reference specimen; and
filling in blank areas in the color-corrected or filtered image of the reference specimen.

17. The copper-based dust analysis method of claim 14, wherein
the reference specimen further comprises:
at least one of an electrode material and iron, in addition to the copper-based dust.

18. The copper-based dust analysis method of claim 11, wherein
the process of processing an image of the specimen comprises:
color-correcting the image of the specimen to blue to facilitate identification of the copper-based dust in the image of the specimen; and
filtering the color-corrected image of the specimen such that a color inverse to blue is visible in the color-corrected image of the specimen.

19. The copper-based dust analysis method of claim 11, wherein
the process of detecting the copper-based dust comprises:
measuring a size of the dust detected in the image of the specimen, and counting the number of dusts.

20. The copper-based dust analysis method of claim 11, wherein
after the process of detecting the copper-based dusts, further comprises:
analyzing a component of the detected copper-based dust, wherein
the process of analyzing the components of the copper-based dust comprises using Laser Induced Breakdown Spectroscopy (LIBS).
